# EUROPÄISCHE PATENTSCHRIFT

(11) **EP 3 663 346 B1**
(45) Veröffentlichungstag und Bekanntmachung des Hinweises auf die Patenterteilung: **15.11.2023**
(21) Anmeldenummer: 18210035.4
(22) Anmeldetag: 04.12.2018
(51) Int. Cl.: C08K 5/09, C08K 5/42

(54) **REAKTIVSILOXANE**
REACTIVE SILOXANES
SILOXANE RÉACTIF

(43) Veröffentlichungstag der Anmeldung: 10.06.2020
(73) Patentinhaber: Evonik Operations GmbH, 45128 Essen (DE)
(72) Erfinder: KNOTT, Wilfried, 453355 Essen (DE); DUDZIK, Horst, 45326 Essen (DE); FAVRESSE, Phillippe, 40880 Ratingen (DE); FIEDEL, Michael, 45239 Essen (DE); BRÖTZMANN, André, 45130 Essen (DE)
(74) Vertreter: Evonik Patent Association

(56) Entgegenhaltungen:
- EP-A1- 0 003 285
- EP-A1- 3 611 216
- EP-A1- 3 611 217
- WO-A1-2014/002919
- WO-A1-2017/185737
- WO-A2-2014/104388
- US-A- 3 032 532
- US-A1- 2011 021 693

## Beschreibung

Die Erfindung betrifft ein Verfahren zur Herstellung linearer oder verzweigter, terminale Acetoxyfunktionen tragender Siloxane, sowie ein Verfahren zur Herstellung linearer oder verzweigter Polyethersiloxane ausgehend von diesen Acetoxysiloxanen.

Die noch nicht veröffentlichte Europäische Patentanmeldung EP18189073.2 beschreibt ein Verfahren zur Herstellung trifluormethansulfonsaurer Acetoxygruppen tragender Siloxane, bei welchem zyklische Siloxane, insbesondere umfassend D₄ (Octamethylcyclotetrasiloxan) und/oder D₅ (Decamethylcyclopentasiloxan), und/oder Mischungen zyklisch-verzweigter Siloxane vom D/T-Typ unter Einsatz von Trifluormethansulfonsäure als Katalysator mit Acetanhydrid und unter Zusatz von Essigsäure umgesetzt werden.

Als bevorzugte Varianten zur Herstellung verzweigter, Acetoxygruppen tragender Siloxane wird dort ausgeführt, dass man zyklisch-verzweigte Siloxane vom DΓΓ-Typ (= DT-Zyklen), genauer
a) Mischungen zyklischer-verzweigter Siloxane vom DΓΓ-Typ, die ausschließlich aus D- und T-Einheiten aufweisenden Siloxanen bestehen und deren mit ²⁹Si-NMR-Spektroskopie bestimmbarer summarischer Anteil der in der Siloxanmatrix vorhandenen D- und T-Einheiten, die Si-Alkoxyund/oder SiOH-Gruppen aufweisen, ≤ 2 Molprozent, bevorzugt kleiner 1 Molprozent ist, und die bevorzugt zumindest 5 Gewichtsprozent Siloxancyclen, wie vorzugsweise Oktamethylcyclotetrasiloxan (D₄), Dekamethylcyclopentasiloxan (D₅) und/oder deren Mischungen enthalten
   oder aber
b) Mischungen zyklischer-verzweigter, ausschließlich D- und T-Einheiten aufweisender Siloxane deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, größer 2 und kleiner 10 Molprozent sind,
einsetzt.

Überwaschenderweise wurde jetzt gefunden, dass auch Silane und/oder Siloxane mit höheren via ²⁹Si-NMR-Spektroskopie bestimmbaren Gehalten an gebundenen Si-Alkoxy- und/oder SiOH-Gruppen als in der mit b) gekennzeichneten Ausführungsvariante der EP18189073.2 sich für die Herstellung von Acetoxysiloxanen und insbesondere auch von verzweigten, terminale Acetoxyfunktionen tragenden Siloxanen eignen, und das keinesfalls beschränkt auf Mischungen zyklisch-verzweigter Siloxane.

Die Lehre der US 3,032,532 weist bereits auf die Möglichkeit hin, lineare Acetoxysiloxane vom Typus AcO(SiR₂O)ₙAc ausgehend von Hexaorganodisiloxanen oder linearen Diorganopolysiloxanen, die mit organischen Radikalen abgeschlossen sind (Siliconölen) oder die mit hydrolysierbaren Radikalen wie OAc-Radikalen, OH-Radikalen, Halogenatomen oder Alkoxy-Radikalen verschlossen sind, durch Umsetzung mit Acetanhydrid, bevorzugt in Gegenwart von Bortriacetat und Pyridin als Katalysator herzustellen.

In den dort die Umsetzung mit Acetanhydrid beschreibenden Beispielen 1, 4, 5 und 6 sind allerdings überaus lange Reaktionszeiten von bis zu 88 Stunden, aber mindestens 24 Stunden angegeben. Dortige Angaben zu Acetoxygehalt, respektive Viskosität erlauben allerdings nicht, das dabei jeweils erzielte Äquilibrierergebnis zu beurteilen. Darüber hinaus gereicht die dortige Nutzung von Pyridin den Umsetzungen mit Blick auf eine mögliche betriebliche Herstellung zum Nachteil.

EP0003285 A1 offenbart kein Reaktionsystem mit Essigsäureanhydrid, stattdessen wird Chlor verwendet.

Überaschenderweise wurde im Rahmen der vorliegenden Erfindung gefunden, dass sich ein Reaktionssystem, umfassend (insbesondere im Wesentlichen bestehend aus)
• Alkoxygruppen tragende Silane und/oder Siloxane
   und/oder
• Acetoxygruppen tragende Silane und/oder Siloxane,
   und/oder
• Hydroxygruppen tragende Silane und/oder Siloxane
• gegebenenfalls in Gegenwart von einfachen Siloxanzyklen und/ oder
• gegebenenfalls in Gegenwart von DT-Zyklen,
   in einem Reaktionsmedium, umfassend (insbesondere im Wesentlichen bestehend aus) Essigsäureanhydrid, Perfluoralkansulfonsäure sowie vorzugsweise Essigsäure
   nach kurzen Reaktionszeiten zu linearen und/oder verzweigten, terminale Acetoxyfunktionen tragenden Siloxanen umsetzen lässt.

Gegenstand der Erfindung ist daher ein Reaktionssystem zur Herstellung Acetoxyfunktionen tragender Siloxane, umfassend (insbesondere bestehend aus)
a) Alkoxygruppen tragende Silane und/oder Siloxane und/oder
b) Acetoxygruppen tragende Silane und/oder Siloxane und/oder
c) Hydroxygruppen enthaltende Silane und/oder Siloxane,
d) gegebenenfalls einfache Siloxanzyklen und/ oder DT-Zyklen,
e) ein Reaktionsmedium, umfassend Essigsäureanhydrid, Perfluoralkansulfonsäure (insbesondere Trifluormethansulfonsaure) sowie vorzugsweise Essigsäure.

Das erfindungsgemäße Reaktionssystem umfasst also zumindest die Reaktanden a) und/ oder b) und/ oder c) und ggf. d) sowie mit e) ein Reaktionsmedium, wobei auch Essigsäureanhydrid, Perfluoralkansulfonsäure und optional Essigsäure am Umsetzungsprozess aktiv teilhaben, wie weiter unten genauer gezeigt wird.

In einer bevorzugten Ausführungsform umfasst das erfindungsgemäße Reaktionssystem, insbesondere besteht aus: Komponenten a) und e). In einer anderen bevorzugten Ausführungsform umfasst das erfindungsgemäße Reaktionssystem, insbesondere besteht aus: Komponenten b) und e). In einer wieder anderen bevorzugten Ausführungsform umfasst das erfindungsgemäße Reaktionssystem, insbesondere besteht aus: Komponenten c) und e). In einer bevorzugten Ausführungsform umfasst das erfindungsgemäße Reaktionssystem, insbesondere besteht aus: Komponenten a), d) und e). In einer anderen bevorzugten Ausführungsform umfasst das erfindungsgemäße Reaktionssystem, insbesondere besteht aus: Komponenten b), d) und e). In einer wieder anderen bevorzugten Ausführungsform umfasst das erfindungsgemäße Reaktionssystem, insbesondere besteht aus: Komponenten c), d) und e). In einer bevorzugten Ausführungsform umfasst das erfindungsgemäße Reaktionssystem, insbesondere besteht aus: Komponenten a), b) und e). In einer wieder anderen bevorzugten Ausführungsform umfasst das erfindungsgemäße Reaktionssystem, insbesondere besteht aus: Komponenten a), c) und e). In einer anderen bevorzugten Ausführungsform umfasst das erfindungsgemäße Reaktionssystem, insbesondere besteht aus: Komponenten b),c) und e). In einer bevorzugten Ausführungsform umfasst das erfindungsgemäße Reaktionssystem, insbesondere besteht aus: Komponenten a), b), d) und e). In einer wieder anderen bevorzugten Ausführungsform umfasst das erfindungsgemäße Reaktionssystem, insbesondere besteht aus: Komponenten a), c), d) und e). In einer anderen bevorzugten Ausführungsform umfasst das erfindungsgemäße Reaktionssystem, insbesondere besteht aus: Komponenten b),c),d) und e). In einer bevorzugten Ausführungsform umfasst das erfindungsgemäße Reaktionssystem, insbesondere besteht aus: Komponenten a),b),c) und e). In einer anderen bevorzugten Ausführungsform umfasst das erfindungsgemäße Reaktionssystem, insbesondere besteht aus: Komponenten a),b),c),d) und e). In jeder dieser vorgenannten Ausführungsformen umfasst die Komponente e) insbesondere Essigsäureanhydrid, Trifluormethansulfonsäure sowie Essigsäure.

DT-Zyklen im Sinne der Erfindung sind zyklisch-verzweigte Siloxane vom DΓΓ-Typ, die ausschließlich aus D- und T-Einheiten aufweisenden Siloxanen bestehen. Bevorzugt ist dass deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, ≤ 2 Molprozent, bevorzugt kleiner 1 Molprozent ist, oder aber größer 2 und kleiner 10 Molprozent ist.

Einfache Siloxancyclen sind nur aus D-Einheiten aufgebaut und im Sinne dieser Erfindung besonders bevorzugt sind Oktamethylcyclotetrasiloxan (D₄), Dekamethylcyclopentasiloxan (D₅), Dodecamethylcyclohexasiloxan (D₆) und/oder deren Mischungen.

Ein Vorteil des erfindungsgemäß beanspruchten Reaktionssystems besteht in der kontrollierten, reproduzierbaren Herstellung von linearen und/ oder verzweigten, terminale Acetoxyfunktionen tragenden Siloxanen bei kurzen Reaktionszeiten.

Es wurde überraschenderweise gefunden, dass das erfindungsgemäße Reaktionsmedium sowohl Edukte wie Alkoxygruppen tragende Silane und/oder Siloxane als auch Acetoxygruppen tragende Silane und/oder Siloxane und/oder Hydroxygruppen enthaltende Silanen und/oder Siloxane, und das gegebenenfalls noch in Gegenwart von einfachen Siloxanzyklen und/ oder gegebenenfalls in Gegenwart von DT-Zyklen im Sinne einer Gesamtreaktion, die sowohl kondensierende als auch äquilibrierende Teilschritte umfasst, eine so vollständige Umsetzung ermöglicht, dass die resultierenden terminale Acetoxyfunktionen tragenden Siloxane allenfalls noch Anteile von SiOH- und/oder SiOR-Gruppen aufweisen, die unterhalb der mit ²⁹Si-NMR erfassbaren Nachweisgrenze liegen.

Welche Bedeutung dem erfindungsgemäß beanspruchten Reaktionsmedium im Sinne einer zügigen und vollständigen Reaktionsführung zukommt, wird deutlich, wenn man zum Beispiel die Arbeit von M. Jaumann et al. in Macromol. Chem. Phys. 2003, 204, 1014-1026 betrachtet. Mit dem Ziel hyperverzweigte Polyalkoxysiloxane über ABs-strukturierte Monomere aufzubauen, beschreiben die Autoren auch die Umsetzung von Tetraethoxysilan mit Essigsäureanhydrid unter Abziehen von Ethylacetat.. Die Reaktion wird bei 137°C über 36 Stunden durchgeführt und liefert trotz der extrem langen Reaktionszeit das angestrebte Acetoxytriethoxysilan in nur 39% Ausbeute.

In einer späteren Publikation (Macromolecules 2006, 19, 1701 - 1708) wird für dieselbe Reaktion sehr kostspieliges und hydrolytisch labiles Tetrakis(trimethylsiloxy)titan als Katalysator eingesetzt. Für industrielle Anwendungen im Produktionsmaßstab geben diese Arbeiten, die sich ja auch nur mit dem kondensierenden Austritt von Essigsäurealkylestern aus SiOR/ Acetanhydrid-Reaktionssystemen beschäftigen, daher keinen Lösungsansatz.

Ohne sich im Folgenden auf theoretische Überlegungen festzulegen, belegen allerdings die erfindungsgemäß durchgeführten Experimente, dass neben den unter den Bedingungen der bei sauren Äquilibrierungen in charakteristischer Weise ablaufenden SiOSi- Reorganisationsreaktionen (Äquilibrierung) und auch gegebenenfalls bei Präsenz von Hydroxygruppen enthaltende Silanen und/ oder Siloxanen ablaufenden Kondensationsreaktionen, gemäß 2 Si-OH →=Si-O-Si= + H₂O , den folgenden, im erfindungsgemäß Essigsäureanhydrid, Perfluoralkansulfonsäure sowie vorzugsweise Essigsäure umfassenden Reaktionsmedium ablaufenden Teilschritten eine ganz besondere Bedeutung zukommt, die hier exemplarisch skizziert werden:
a)

   ≡Si-OR + Ac₂O → ≡Si-OAc + ROAc
b)

   ≡Si-OR + ≡Si-OAc → ≡Si-O-Si≡ + ROAc
c)

   ≡Si-O-Si≡ + Ac₂O → 2 ≡Si-OAc
sowie für den im Fall, dass Hydroxygruppen enthaltende Silane und/ oder Siloxane zugegen sind, auch:
d)

   ≡SiOH + Ac₂O → ≡Si-OAc + AcOH
e)

   ≡SiOH + ≡Si-OAc → ≡Si-O-Si≡ + AcOH

mit ≡Si = silanischer Rest und/ oder beliebige Silikonreste bedeutet
mit R = Alkylrest, verzweigter Alkylrest, Cycloalkylrest mit 1 bis 10 Kohlenstoffatomen, vorzugsweise mit 1 bis 4, besonders bevorzugt mit 2 Kohlenstoffatomen ( = Ethyl-)
ROAc = Essigsäurealkylester
Ac = Acetylrest (CH₃C(O)) und
AcOH = Essigsäure und
Ac₂O = Essigsäureanhydrid.

Sollte Wasser, das auch aus der Präsenz von Hydroxygruppen enthaltenden Silanen und/oder Siloxanen stammenden Kondensationsreaktion gemäß
f)

2 ≡Si-OH → ≡Si-O-Si≡ + H₂O

entstehen könnte, zugegen sein, sind folgende Reaktionen relevant:
g)

   H₂O + Ac₂O → 2 AcOH

   und
h)

   H₂O + 2 ≡Si-OAc → ≡Si-O-Si≡ + 2 AcOH

Die vorstehend skizzierten Teilschritte a) bis h) basieren auf theoretischen Überlegungen und dienen lediglich der vereinfachten Veranschaulichung der Erfindung und sollen das Verständnis der Erfindung erleichtern. Sie stellen keinerlei Beschränkung des beanspruchten Gegenstandes dar.

Als Referenz zu der im Rahmen dieser Schrift verwendeten M-, D-, T-, Q-Nomenklatur zur Beschreibung der Baueinheiten von Organopolysiloxanen sei W. Noll, Chemie und Technologie der Silicone, Verlag Chemie GmbH, Weinheim (1960), Seite 2 ff. angeführt.

Bei der erfindungsgemäßen Herstellung verzweigter terminale Acetoxyfunktionen tragender Siloxane, enthält mindestens ein Reaktionspartner eine T- und/ oder Q-Gruppe (=Si entspricht silanischer Rest und/ oder beliebiger Silikonrest enthaltend T- und/ oder Q-Strukturen).

Zur Herstellung Acetoxygruppen tragender Siloxane, insbesondere beim Aufbau verzweigter Acetoxygruppen tragender Siloxane, ist ein Eintrag von Wasser nicht erforderlich, um die gewünschten Zielstrukturen zu erhalten. Die o.g. Teilschritte a), b) und c) verdeutlichen dies exemplarisch.

Dieser erfindungsgemäße Befund ist für den Fachmann in keiner Weise vorhersehbar, weil nach geübtem Stand der Technik für den gezielten Einbau von T- und/ oder Q-Einheiten in ein Siloxangerüst der Eintrag von Wasser und sei es in Form des Einsatzes von Hydroxygruppen enthaltenden Silanen und/ oder Siloxanen unabdingbar ist.

Daher wird in einer bevorzugten Ausführungsform der Erfindung auf den Einsatz von Hydroxygruppen enthaltenden Silanen und/ oder Siloxanen verzichtet, was unter dem Aspekt der Abfallvermeidung besonders attraktiv ist, da als Nebenprodukt nur ein einfach - zum Beispiel durch Destillation - aus dem Reaktionssystem zu entfernender Essigsäurealkylester entsteht. Verzichten bedeutet hierbei, dass weniger als 5 Gewichtsprozent Si-gebundener Hydroxygruppen bezogen auf die Reaktandmatrix vorhanden sind. Insbesondere sind bei dieser bevorzugten Ausführungsform keinerlei Anteile Si-gebundener Hydroxygruppen in der Reaktandmatrix enthalten.

Werden hingegen in einer weniger bevorzugten Ausführungsform der Erfindung Hydroxygruppen enthaltende Silane und/oder Siloxane eingesetzt, so entsteht hierbei Essigsäure als Nebenprodukt, was auch aus den o.g. exemplarischen Teilschritten d), e), f), g) und h) ersehen werden kann. Auch die Essigsäure kann zum Beispiel destillativ aus dem Reaktionsystem entfernt werden.

Liegt daher ein Reaktionssystem vor, umfassend Alkoxygruppen tragendene Silane und/oder Siloxane, und/oder
Acetoxygruppen tragende Silane/ Siloxane,
und/oder Hydroxygruppen enthaltende Silane und/oder Siloxane,
und gegebenenfalls noch einfache Siloxanzyklen und/oder DT-Zyklen,
so entstehen bei der Herstellung der Acetoxyfunktionen tragenden Siloxane sowohl Essigsäureakylester als auch ggf. Essigsäure, die man als Nebenprodukte zum Beispiel destillativ abtrennen kann.

Verblüffend und für den Fachmann nicht vorhersehbar ermöglich das erfindungsgemäße Reaktionsmedium, umfassend Essigsäureanhydrid, Perfluoralkansulfonsäure sowie vorzugsweise Essigsäure, die reproduzierbare Bereitstellung strukturdefinierter, linearer oder verzweigter Acetoxysiloxane.

Die erfindungsgemäß resultierenden Acetoxygruppen tragenden Siloxane sind vorzügliche Edukte insbesondere für die Herstellung von Polyethersiloxanen, die als grenzflächenaktive Tenside Eingang in anspruchsvolle technische Anwendungen, wie zum Beispiel für die Herstellung von Polyurethanschaumstabilisatoren, Entschäumern, Lack- und Dispergieradditiven, Dismulgatoren u.ä. nehmen.

Das erfindungsgemäße Herstellverfahren läuft sehr zügig unter sehr moderaten Reaktionsbedingungen, vermeidet aufwendige Reaktionssequenzen, exotische Katalysatoren, schwierig abzutrennende Nebenprodukte und wird vorzugsweise unter Verzicht auf den Einsatz von Hydroxygruppen tragenden Silanen und/ oder Siloxanen durchgeführt.

Nachfolgend wird das erfindungsgemäße Prinzip bei der Herstellung verzweigter, Acetoxygruppen tragender (III) und auch verzweigter, zudem terminale Acetoxygruppen tragender Siloxane (VII) rein beispielhaft veranschaulicht, wobei zur Vereinfachung der formelmäßigen Darstellung und zudem auch unter Berücksichtigung einer bevorzugten Ausführungsform des erfindungsgemäßen Verfahrens in Gänze auf den Einsatz von Hydroxygruppen enthaltenden Silanen und/ oder Siloxanen verzichtet wird:
1)

   CH₃Si(OEt)₃ + Ac₂O → CH₃Si(OEt)₂OAc **(I)** + EtOAc
2)

   CH₃Si(OEt)₂OAc + CH₃Si(OEt)₃ → CH₃Si(OEt)₂OSi(OEt)₂CH₃ **(II)** + EtOAc
3)

   CH₃Si(OEt)₂OSi(OEt)₂CH₃ + 4 Ac₂O → CH₃Si(OAc)₂OSi(OAc)₂CH₃ **(III)** + 4 EtOAc

Dieses Aufbauprinzip ist gleichfalls beschreibend, wenn an Stelle des Methyltriethoxysilans ein Voräquilibrat zum Beispiel gewonnen aus Methyltriethoxysilan mit Siloxanzyklen (z.B. D₅) (= CH₃SiDₐD_{b}D_{c}(OEt)₃) eingesetzt wird, zum Beispiel:
4)

   CH₃Si(OEt)₃ + (a+b+c) D _{5/(a+b+c)} → H₃SiDₐD_{b}D_{c}(OEt)₃ **(IV)**
5)

   CH₃SiDₐD_{b}D_{c}(OEt)₃ + Ac₂O → CH₃Si(DₐOEt)(D_{b}OEt)D_{c}(OAc) **(V)** + EtOAc
6)

   CH₃Si(DₐOEt)(D_{b}OEt)D_{c}(OAc) + CH₃SiDₐD_{b}D_{c}(OEt)₃ → CH₃Si(DₐOEt)(D_{b}OEt)D_{c}----D_{c}SiCH₃(DₐOEt)(D_{b}OEt) **(VI)** + EtOAc
7)

   CH₃Si(DₐOEt)(D_{b}OEt)D_{c}----D_{c}SiCH₃(DₐOEt)(D_{b}OEt) + 4 Ac₂O → CH₃Si(DₐOAc)(D_{b}OAc)D_{c}----D_{c}SiCH₃(DₐOAc)(D_{b}OAc) **(VII)** + 4 EtOAc

Alle hier beispielhaft dargestellten Teilreaktionen werden mit Hilfe starker Brönstedtsäuren, bevorzugt mit Perfluoralkylsulfonsäuren, besonders bevorzugt mit Trifluormethansulfonsäure katalysiert.

Die gerade skizzierten exemplarischen Reaktionsgleichungen 1) bis 7) stellen keinerlei Beschränkung des beanspruchten Gegenstandes dar und werden wie folgt erläutert:

Die Reaktionsgleichung 1) zeigt die Umsetzung von Methyltriethoxysilan mit einem Äquivalent Essigsäureanhydrid, die unter Abspaltung von Ethylacetat das Acetoxy-funktionalisierte Silan CH₃Si(OEt)₂OAc **(I)** ergibt, vgl. oben.

Dessen konsekutive Umsetzung mit einem Äquivalent Methyltriethoxysilan führt unter Ethylacetatfreisetzung zu einem SiOSi-verknüpften, Alkoxy-funktionalisierten Molekül **(II)** (Reaktionsgleichung 2)).

Die Umsetzung von **(II)** mit 4 Äquivalenten Essigsäureanhydrid erzeugt wiederum unter Ethylacetatfreisetzung ein Disiloxan **(III).** das 4 Acetoxygruppen trägt (Reaktionsgleichung 3)).

In einem weiteren, aber nicht im Schema dargestellten Schritt, könnte Disiloxan (III) nun zum Beispiel mit Siloxanzyklen unter Säurekatalyse zu einem verzweigten, terminale Acetoxygruppen tragenden Siloxan äquilibriert werden.

Einen anderen Weg des erfindungsgemäß beanspruchten Verfahren weist die Reaktionsgleichung 4, bei der Methyltriethoxysilan zunächst mit Siloxanzyklen zu einem einfach verzweigten, Ethoxyendgruppen aufweisenden Siloxan (IV) CH₃SiDₐD_{b}D_{c}(OEt)₃ äquilibriert wird. Die für die einäquilibrierten D-Einheiten in der Formel verwendeten Indizes a, b, c sollen zudem deutlich machen, dass auch die individuellen Zweige des verzweigten Siloxans (IV) im Äquilibriergleichgewicht in ihrer Länge verschieden sein können.

Durch die Umsetzung von (IV) mit einem Äquivalent Essigsäureanhydrid entsteht unter Ethylacetatfreisetzung das einfach verzweigte, eine Acetoxy- und zwei Ethoxygruppen tragende Siloxan (V) (Reaktionsgleichung 5)).

Durch stöchiometrische Umsetzung von (V) mit (IV) findet unter Freisetzung von Ethylacetat die Kondensation zu **(VI)** unter Bildung einer SiOSi-Bindung statt (Reaktionsgleichung 6)).

Das zweifach verzweigte, 4 Ethoxyendgruppen tragende Siloxan (VI) wird dann mit 4 Äquivalenten Essigsäureanhydrid in das zweifach verzweigte, 4 Acetoxyendgruppen tragende Siloxan **(VII)** umgewandelt, wobei 4 Äquivalente Ethylacetat freigesetzt werden (Reaktionsgleichung 7)).

Dieser in den Reaktionsgleichungen 4) bis 7) exemplarisch aufgezeigte Weg der Herstellung verzweigter, terminale Acetoxygruppen tragender Siloxane ist im erfindungsgemäßen Beispiel 1 gezeigt, wobei dort ein struktureller Verzweigungsgrad von 3
(≠ 2 in Reaktionsgleichungen 4) bis 7)) angestrebt wird.

Jenseits der in den Reaktionsgleichungen 4) bis 7) (aber auch in 1) bis 3)) sehr detailliert gezeigten Teilreaktionen, macht das erfindungsgemäße Beispiel 1 deutlich, dass man durch den stöchiometrischen Einsatz der Reaktanden und zudem durch geeignete Wahl der Reaktionsbedingungen in sehr einfacher Weise zu einer anspruchsvollen, molekularen Zielstruktur gelangt.

Zugleich verdeutlicht das erfindungsgemäße Beispiel 1 auch, dass die Umsetzung von Alkoxygruppen tragenden Silanen und/oder wie dort gezeigt Alkoxygruppen tragenden Siloxanen mit Essigsäureanhydrid analog Reaktionsgleichungen 5) bis 7) eine von Exothermie gekennzeichnete Gesamtreaktion ist (Temperaturanstieg um 40°C).

Im Sinne eines sequenzierten Vorgehens sieht Beispiel 1 zunächst die trifluormethansulfonsaure Äqulibrierung eines terminale Ethoxygruppen aufweisenden, verzweigten Siloxans vor (= Voräquilibrat), das dann durch Hinzugabe von Essigsäureanhydrid und Essigsäure in das angestrebte, verzweigte terminale Acetoxygruppen tragende Siloxan umgewandelt wird. Da das Voräquilibrat noch Trifluormethansulfonsäure enthält, entsteht im zweiten Schritt durch die Hinzugabe von Essigsäureanhydrid und Essigsäure das erfindungsgemäß beanspruchte Reaktionsmedium.

Der Zugabezeitpunkt des im Reaktionsmedium eingesetzten Acetoxygruppen tragenden Silans und/ oder Siloxans ist wenig kritisch und kann über einen weiten Bereich variiert werden. So ist erfindungsgemäß auch die in-situ Herstellung des Acetoxygruppen tragenden Silans und/oder Siloxans aus nicht Acetoxygruppen tragenden Vorläufern wie gegebenenfalls einfachen Siloxanzyklen, DT-Zyklen und/oder Hydroxygruppen enthaltenden Silanen und/oder Siloxanen im Reaktionsmedium umfassend Essigsäureanhydrid, Perfluoralkansulfonsäure und vorzugsweise Essigsäure, möglich.

In einer erfindungsgemäßen Ausführungsform kann man zum Beispiel Hydroxygruppen enthaltende Siloxane unmittelbar im Reaktionsmedium umfassend Essigsäureanhydrid, Perfluoralkansulfonsäure und vorzugsweise Essigsäure zu einem, terminale Acetoxygruppen tragenden Siloxan umsetzen. Ein noch Siloxanzyklen mitumfassendes Reaktionssystem ist in Reaktionsgleichung 6) dargestellt.

Beispielsweise erschließt der erfindungsgemäße Einsatz von im Markt befindlichen PDM-Siloxanen (insbesondere α,ω-Polydimethyl-siloxandiolen) als Hydroxygruppen tragenden Siloxanen somit unmittelbar den Zugang zu α,ω-Diacetoxypolydimethylsiloxanen.

Die Erfinder haben festgestellt, dass man in der Wahl der Zusammensetzung des erfindungsgemäß definierten Reaktionssystems frei ist, sofern dieses im erfindungsgemäßen Reaktionsmedium, umfassend Essigsäureanhydrid, Perfluoralkansulfonsäure und vorzugsweise Essigsäure, umgesetzt wird. Es wurde überraschend festgestellt, dass das erfindungsgemäße Reaktionsmedium, umfassend Essigsäureanhydrid, Perfluoralkansulfonsäure und vorzugsweise Essigsäure, bei beliebig zusammengesetzten Reaktionssystemen, umfassend
• Alkoxygruppen tragende Silane und/oder Siloxane
   und/oder
• Acetoxygruppen tragende Silane und/oder Siloxane,
   und/oder
• Hydroxygruppen enthaltende Silane und/oder Siloxane
• gegebenenfalls einfache Siloxanzyklen
• gegebenenfalls DT-Zyklen,
eine gezielte Bereitstellung linearer oder verzweigter, terminale Acetoxyfunktionen tragender Siloxane ermöglicht.

So verdeutlicht das erfindungsgemäße Beispiel 1 den Fall, dass ein terminale Alkoxygruppen tragendes, verzweigtes Silikonäquilibrat als alleiniger Reaktand mit dem Reaktionsmedium, dort bestehend aus Essigsäureanhydrid, Trifluormethansulfonsäure und Essigsäure, kontrolliert zu einem terminale Acetoxygruppen tragenden, verzweigten Siloxan umgesetzt wird.

Unter Abwandlung des in Beispiel 1 beschrittenen Weges ist es ebenfalls erfindungsgemäß möglich, alle Reaktanden von Beginn an direkt mit dem Reaktionsmedium unter guter Durchmischung vorzulegen und dann durch Erhitzen und Entfernen flüchtiger Nebenprodukte zur Umsetzung zu bringen (erfindungsgemäßes Beispiel 2). Dies entspricht einer bevorzugten Ausführungsform.

Abhängig von der angestrebten Struktur des terminale Acetoxygruppen tragenden Siloxans kann im Rahmen dieser Erfindung ein sequenziertes Vorgehen (analog Beispiel 1) oder aber ein konzertiertes Vorgehen (analog Beispiel 2) vorteilhaft sein, was beides jeweils bevorzugten Ausführungsformen der Erfindung entspricht.

So ist es beim Aufbau verzweigter terminale Acetoxygruppen tragender Siloxane, die zum Beispiel mehrere T-Einheiten im mittleren Siloxangerüst enthalten, präferiert, erst ein Voräquilibrat herzustellen, in dessen mittlerer molekularer Struktur die T-Einheiten bereits von durch D-Einheiten gebildeten Zweigen umgeben sind (vergleiche hierzu die Formel (IV) CH₃SiDₐD_{b}D_{c}(OEt)₃ in Reaktionsgleichungen 4) und 5)). Dies entspricht einer bevorzugten Ausführungsform.

Für den Fachmann erschließt sich diese bevorzugte Verfahrensweise dadurch, weil es gilt, Kumulationen von unmittelbar miteinander verknüpften T-Einheiten zu vermeiden, da diese direkt über Siloxanylbrücken unmittelbar miteinander verknüpften T-Einheiten im späteren Reaktionsverlauf nur sehr schwierig zu separieren sind. Wie man der Literatur entlehnen kann, ist das Aufbrechen homologer, aus T-Einheiten bestehender Siloxanketten gerade unter Säurekatalyse schwierig. Zum Reaktivitätsverhalten von M-, D, und T-Einheiten sei auf M.A. Brook, "Silicon in Organic, Organometallic and Polymer Chemistry", John Wiley & Sons, Inc., New York (2000), S. 264 ff. verwiesen.

Im Falle linearer, α,ω-Diacetoxypolydimethylsiloxane stellt sich diese Aufgabe nicht, so dass man alle Reaktanden zusammen mit dem erfindungsgemäßen Reaktionsmedium (also in konzertierter Weise) vorlegen und zur Umsetzung bringen kann. Dies entspricht einer bevorzugten Ausführungsform.

Die erfindungsgemäß beliebig zusammengesetzten Reaktionssysteme umfassen beispielsweise die Reaktanden, die nachfolgend vereinfacht und exemplarisch dargestellt sind:
1)

   AcO-Dₓ-OAc + D₅ + Ac₂O → 2 AcO-D_{x+5/2}-OAc
2)

   AcO-Dₓ-OAc + HO-D_{y}-OH + Ac₂O → AcO-_{Dx+y}-OAc + 2 HOAc
3)

   RO-Dₓ-OR + D₅ + 2 Ac₂O → AcODₓ₊₅-OAc + 2 ROAc
4)

   b (DT)^{OH/OR} + bx D₅ + Ac₂O → (D₅ₓ₊₁T)_{b}^{OAc} + b AcOH + b ROAc
5)

   AcO-Dₓ-OAc + RO-D_{y}-OR + Ac₂O → AcO-D_{x+y}-OAc + 2 ROAc
6)

   HO-Dx-OH + b D₅ + 2 Ac₂O → AcO-D_{x+5b}-OAc + 2 AcOH,

   wobei hierin:
   in 1) ein Acetoxysilan (X = 1) und/ oder lineares Acetoxysiloxan (X > 1) mit Siloxanzyklen,
   in 2) ein Acetoxysilan (X = 1) und/ oder lineares Acetoxysiloxan (X > 1) mit einem hydroxyfunktionellen Silan (y = 1) und/ oder Siloxan (y > 1),
   in 3) ein Alkoxysilan (X = 1) und/ oder lineares Alkoxysiloxan (X > 1) mit Siloxanzyklen,
   in 4) Hydroxy/ Alkoxyfunktionelle DT-Zyklen, die gleiche molare Anteile an OH/ OR- Gruppen aufweisen, mit Siloxanzyklen und
   in 5) ein Acetoxysilan (X = 1) und/ oder lineares Acetoxysiloxan (X > 1) mit einem Alkoxysilan (X = 1) und/ oder linearen Alkoxysiloxan (X > 1) und
   in 6) ein hydroxyfunktionelles, lineares Siloxan mit Siloxanzyklen abgebildet sind. In allen Reaktionen umfasst das Reaktionsmedium Essigsäureanhydrid, Perfluoralkansulfonsäure sowie vorzugsweise Essigsäure.

Die Struktur (D₅ₓ₊₁T)_{b}^{OAc} aus Reaktionszeile 4) soll hierin stellvertretend für ein verzweigtes, T-Strukturen enthaltendes Acetoxysiloxan mit terminalen Acetoxygruppen stehen, wobei
b(5x+1) die gesamten D-Einheiten (= b(a+1)+2a+2) in Formel 1 darstellt und R¹ für den Methylrest steht:

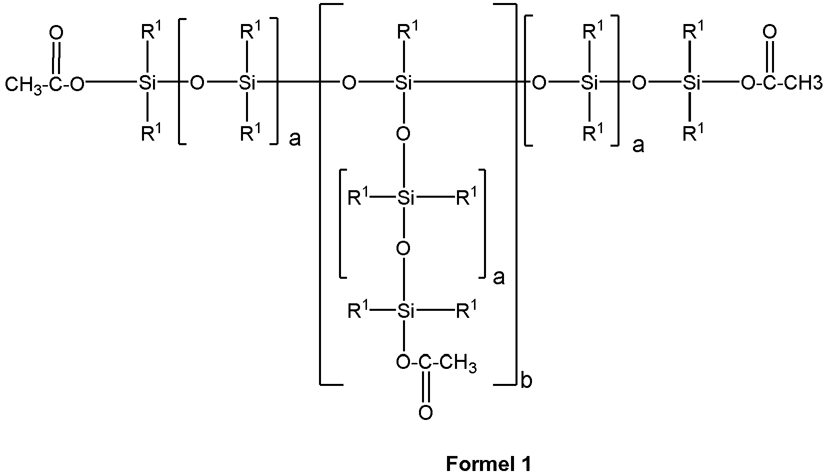

Die vorgenannten Reaktionszeiten 1) bis 6) stellen keinerlei Beschränkung des beanspruchten Gegenstandes dar. Für den Fachmann erschließt sich aus dieser beispielhaft zur Veranschaulichung wiedergegeben Kombinatorik der Reaktanden, dass sich noch mannigfache Möglichkeiten an erfindungsgemäß nutzbaren Kombinationen dadurch ergeben, indem man die jeweiligen Reaktionssysteme durch Hinzunahme weiterer Reaktanden erweitert.

Bevorzugt werden als Alkoxysilane Dimethyldialkoxysilane, Methyltrialkoxysilane und/oder ortho-Alkylkieselsäureester Si(OR)₄ eingesetzt. Der Rest R bedeutet hierbei Alkylrest, verzweigter Alkylrest, Cycloalkylrest mit 1 bis 10 Kohlenstoffatomen, vorzugsweise mit 1 bis 4, besonders bevorzugt mit 2 Kohlenstoffatomen ( = Ethyl-).

Bevorzugt werden als Alkoxysiloxane lineare und/oder verzweigte Alkoxysiloxane der Formeln: 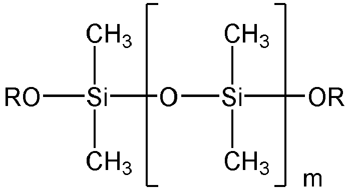
mit m = 1 bis 300, vorzugsweise 12 bis 150, besonders bevorzugt m = 20 bis 80, oder

   CH₃SiDₐD_{b}D_{c}(OR)₃

   oder

   SiDₐD_{b}D_{c}D_{d}(OR)₄
mit a,b,c und d jeweils unabhängig voneinander 1 bis 100, vorzugsweise 2 bis 50, besonders bevorzugt 10 bis 30 und
R = Alkylrest, verzweigter Alkylrest, Cycloalkylrest mit 1 bis 10 Kohlenstoffatomen, vorzugsweise mit 1 bis 4, besonders bevorzugt mit 2 Kohlenstoffatomen (= Ethyl-)
   eingesetzt.

Bevorzugt eingesetzte Alkoxysiloxane sind zum Beispiel aus sauren Äquilibrierungen von Dimethyldialkoxysilanen oder Methyltrialkoxysilanen mit einfachen Siloxanzyklen (zum Beispiel D₄/D₅) zugänglich oder können aber auch beispielsweise durch die Reaktion entsprechender Acetoxysiloxanvorstufen mit Alkoholen unter Abspaltung von Essigsäurealkylester gewonnen werden. Besonders bevorzugt ist der Einsatz von Ethanol.

Erfindungsgemäß bemisst sich die vorzugsweise eingesetzte Menge an Essigsäureanhydrid an der angestrebten molekularen Zielstruktur, wobei der eventuelle Eintrag von Acetoxygruppen tragenden Silanen und/oder Siloxanen aber auch der gegebenenfalls erfolgende Eintrag von hydroxyfunktionellen Silanen/ und oder Siloxanen stöchiometrisch zu berücksichtigen sind. Für den Fachmann verständlich, gilt es, im Reaktionsansatz große Überschüsse an Essigsäureanhydrid zu vermeiden, da im Falle überschüssig eingesetzten Essigsäureanhydrids, die entstehenden linearen oder verzweigten Acetoxygruppen tragenden Siloxane tendenziell zu niederen Molmassen verschoben werden, was eine Abweichung von der angestrebten Zielstruktur bedingt.

Ebenfalls sollte auch der gegebenenfalls zum Beispiel über eingesetzte hydroxyfunktionelle Silane und/ oder Siloxane eingetragene Wassergehalt (molekular gebunden und/ aber auch freies Wasser) stöchiometrisch berücksichtigt werden, da jedes Mol Wasser zu einer Spaltung eines Mols Essigsäureanhydrid oder auch zu einer weiteren Verknüpfung von Acetoxygruppen tragenden Siloxanen führt im Sinne der o.g. Reaktionen g) und h).

Im Falle unklarer Herkunft der eingesetzten Reaktanden und der damit gegebenenfalls verbundenen, unsicheren analytischen Bewertung der Funktionalität der darin vertretenen Acetoxy-, respektive Hydroxyfunktionellen Silane und/ oder Siloxane (inklusive des darin gegebenenfalls enthaltenen freien Wassers) empfehlen sich wenige orientierende Vorversuche zur Herstellung der angestrebten Zielstruktur, um die jeweilige Rezeptur mit entsprechender Sicherheit zu definieren.

Dieses bevorzugte Vorgehen kann gleichfalls dazu dienen, eventuelle Unsicherheiten beim Einsatz von Alkoxygruppen tragenden Silanen und/oder Siloxanen auszuräumen.

Als Acetoxysilane werden bevorzugt Diacetoxydimethylsilan und Triacetoxymethylsilan eingesetzt. Im Falle des Einsatzes von Acetoxysiloxanen werden bevorzugt solche eingesetzt, die in der noch nicht veröffentlichten Europäischen Patentanmeldung EP18189073.2 beschrieben sind.

Bevorzugt werden als einfache Siloxanzyklen D₃ (Hexamethylcyclotrisiloxan), D₄ (Octamethylcyclotetrasiloxan), D₅ (Dekamethylcyclopentasiloxan, D₆ (Dodekamethylcyclohexasiloxan) eingesetzt. Vorzugsweise werden D₄ und/oder D₅, besonders bevorzugt D₅ eingesetzt.

Bevorzugt werden als hydroxyfunktionelle Silane Dimethylsilanol (CH₃)Si(OH)₂, Methylsilanol (CH₃Si(OH)₃) und ortho-Kieselsäure Si(OH)₄ eingesetzt.

Bevorzugt werden als hydroxyfunktionelle Siloxane α,ω-Polydimethylsiloxandiole (PDM-Siloxane) der Formel: 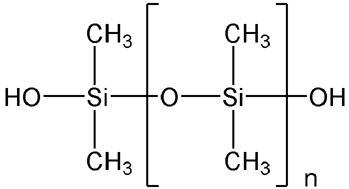 mit n = 1 bis 300, vorzugsweise n = 12 bis 150, besonders bevorzugt n = 20 bis 80
eingesetzt.

Als zyklisch verzweigte Siloxane vom DT-Typ (DT-Zyklen) werden vorzugsweise
a) Mischungen zyklischer-verzweigter Siloxane vom DΓΓ-Typ, die ausschließlich aus D- und T-Einheiten aufweisenden Siloxanen bestehen und deren mit ²⁹Si-NMR-Spektroskopie bestimmbarer summarischer Anteil der in der Siloxanmatrix vorhandenen D- und T-Einheiten, die Si-Alkoxyund/oder SiOH-Gruppen aufweisen, ≤ 2 Molprozent, bevorzugt kleiner 1 Molprozent ist, und die bevorzugt zumindest 5 Gewichtsprozent Siloxancyclen, wie vorzugsweise Oktamethylcyclotetrasiloxan (D₄), Dekamethylcyclopentasiloxan (D₅) und/oder deren Mischungen enthalten oder aber
b) auch Mischungen zyklischer-verzweigter, ausschließlich D- und T-Einheiten aufweisender Siloxane deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, größer 2 und kleiner 10 Molprozent sind, eingesetzt.

Gemäß einer bevorzugten Ausführungsform der Erfindung setzt man Essigsäure in Mengen von 0,4 bis 3,5 Gewichtsprozent, vorzugsweise 0,5 bis 3 Gewichtsprozent, bevorzugt 0,8 bis 1,8 Gewichtsprozent, besonders bevorzugt in Mengen von 1,0 bis 1,5 Gewichtsprozent bezogen auf das Reaktionssystem hinzu.

Bevorzugt wird als Perfluoralkansulfonsäure Perfluorbutansulfonsäure oder Trifluormethansulfonsäure eingesetzt, insbesondere aber Trifluormethansulfonsäure.

Der Katalysator Perfluoralkansulfonsäure, nämlich insbesondere Trifluormethansulfonsäure, wird gemäß einer bevorzugten Ausführungsform der Erfindung in Mengen von 0,1 bis 1,0 Massenprozent, bevorzugt 0,1 bis 0,3 Massenprozent, bezogen auf das Reaktionssystem, eingesetzt.

Zur Absicherung der erzielten Äquilibrierqualität in den Acetoxygruppen tragenden Siloxanen geht man erfindungsgemäß bevorzugt wie folgt vor.

Als Indikator für das Erreichen des Äquilibriergleichgewichtes wird der gaschromatographisch bestimmte Gesamtcylengehalt definiert als die Summe der D₄-, D₅-, D₆-Gehalte bezogen auf die Siloxanmatrix und festgestellt nach der Derivatisierung der α,ω-Diacetoxypolydimethylsiloxane bzw. der verzweigten Acetoxygruppen tragenden Siloxane zu den entsprechenden α,ω-Diisopropoxypolydimethylsiloxanen bzw. den verzweigten, Isopropoxygruppen tragenden Siloxanen herangezogen. Die Derivatisierung zu den α,ω-Diisopropoxypolydimethylsiloxanen bzw. den verzweigten, Isopropoxygruppen tragenden Siloxanen wird hierbei bewusst gewählt, um eine unter den Bedingungen der gaschromatographischen Analyse gegebenenfalls erfolgende, thermisch induzierte Rückspaltungsreaktion der α,ω-Diacetoxypolydimethylsiloxane bzw. der verzweigten Acetoxygruppen tragenden Siloxane zu verhindern (zur Rückspaltungsreaktion siehe u.a. J. Pola et al., Collect. Czech. Chem. Commun. 1974, 39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)).

Mit dem Begriff "endäquilibriert" ist im Sinne der Erfindung gemeint, dass das Äquilibriergleichgewicht erreicht worden, das sich bei einer Temperatur von 23°C und einem Druck von 1013,25 hPa einstellt. Als Indikator für das Erreichen des Äquilibriergleichgewichtes kann der gaschromatographisch bestimmte Gesamtcylengehalt definiert als die Summe der D₄-, D₅-, D₆-Gehalte bezogen auf die Siloxanmatrix und festgestellt nach der Derivatisierung der α,ω-Diacetoxypolydimethylsiloxane zu den entsprechenden α,ω-Diisopropoxypolydimethylsiloxanen beziehungsweise nach der Derivatisierung der verzweigten Acetoxysiloxane zu den entsprechenden verzweigten Isopropoxysiloxanen herangezogen werden.

Der erfindungsgemäße Einsatz der Essigsäure ermöglicht hier die problemlose Unterschreitung sonst üblicher Gleichgewichtsanteile von etwa 13 Gewichtsprozent des Gesamtcyclengehaltes bei den linearen α,ω-Diacetoxypolydimethylsiloxanen und von etwa 8 Gewichtsprozent des Gesamtcyclengehaltes bei den verzweigten Acetoxysiloxanen.

Demzufolge entspricht es einer bevorzugten Ausführungsform wenn Gleichgewichtsanteile des Gesamtcyclengehaltes von kleiner 13, vorzugsweise kleiner 12 Gewichtsprozent bei den linearen α,ω-Diacetoxypolydimethylsiloxanen. und Gleichgewichtsanteile des Gesamtcyclengehaltes von kleiner 8, vorzugsweise kleiner 7 Gewichtsprozent bei den verzweigten Acetoxysiloxanen unterschritten werden

Gemäß einer bevorzugten Ausführungsform führt man die Umsetzung zunächst in einem Temperaturbereich von 40 bis 120°C und danach zur Sicherstellung der Endäquilibrierung im Temperaturbereich von 140 bis 160°C und hierbei über einen Zeitraum von 4 bis 10 Stunden durch.

Erfindungsgemäß wurde weiterhin festgestellt, dass es für das optische Erscheinungsbild der erhaltenen Acetoxysiloxane vorteilhaft sein kann, wenn man das Reaktionsmedium, umfassend Essigsäureanhydrid, Perfluoralkansulfonsäure sowie vorzugsweise Essigsäure so partioniert, dass man zunächst die Perfluoralkansulfonsäure kombiniert mit Essigsäure zum Einsatz bringt und erst dann durch Zugabe von Essigsäureanhydrid ergänzt. Diese Beobachtung ist in den Beispielen 1, 2 und 3 wiedergegeben. Dies entspricht einer bevorzugten Ausführungsform.

Ein weiterer Gegenstand der vorliegenden Erfindung betrifft trifluormethansulfonsaure, endäquilibrierte lineare a,co-Acetoxygruppen-tragende Siloxane, welche Gesamtcyclengehalte, definiert als Summe der Gehaltsanteile der zyklischen Siloxane umfassend D₄ , D₅ und D₆ bezogen auf die Siloxanmatrix und gaschromatographisch ermittelt nach deren Derivatisierung zu den entsprechenden linearen α,ω-Isopropoxysiloxanen von kleiner 13, vorzugsweise kleiner 12 Gewichtsprozent aufweisen, vorzugsweise hergestellt nach einem erfindungsgemäßen Verfahren wie zuvor beschrieben.

Ein weiterer Gegenstand der vorliegenden Erfindung betrifft trifluormethansulfonsaure, endäquilibrierte verzweigte Acetoxygruppen-tragende Siloxane vorzugsweise hergestellt wie hierin beschriebem, dass sie Gesamtcyclengehalte, definiert als Summe der Gehaltsanteile der zyklischen Siloxane umfassend D₄ , D₅ und D₆ bezogen auf die Siloxanmatrix und gaschromatographisch ermittelt nach deren Derivatisierung zu den entsprechenden verzweigten Isopropoxysiloxanen von kleiner 8, vorzugsweise kleiner 7 Gewichtsprozent aufweisen.

### Beispiele

Die folgenden Beispiele dienen dem Fachmann allein zur Erläuterung dieser Erfindung und stellen keinerlei Beschränkung des beanspruchten Gegenstandes dar. Die Bestimmung der Wassergehalte erfolgt grundsätzlich mit der Karl-Fischer-Methode in Anlehnung an DIN 51777, DGF E-III 10 und DGF C-III 13a. Die ²⁹Si-NMR-Spektroskopie diente in allen Beispielen der Reaktionsverfolgung.

Die ²⁹Si-NMR-Proben werden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in CDCl₃ und gegen Tetramethylsilan (TMS) als externem Standard [d(²⁹Si) = 0,0 ppm] gemessen.

Die GPC's (Gel-Permeations-Chromatographie) werden unter Verwendung von THF als mobiler Phase an einer Säulenkombination SDV 1000/10000A, Länge 65 cm, ID 0,80 bei einer Temperatur von 30°C an einem SECcurity² GPC System 1260 (PSS Polymer Standards Service GmbH) aufgenommen.

Die Gaschromatogramme werden an einem GC-Gerät des Typs GC 7890B der Fa. Agilent Technologies ausgestattet mit einer Säule vom Typ HP-1; 30m x 0,32mm ID x 0,25µm dF (Agilent Technologies Nr. 19091Z-413E) und Wasserstoff als Trägergas mit folgenden Parametern aufgenommen:
Detektor: FID; 310°C
Injektor: Split; 290°C
Mode: constant flow 2 mL/min
Temperaturprogramm: 60°C mit 8°C/min -150°C mit 40°C/min - 300°C 10 min.

Als Indikator für das Erreichen des Äquilibriergleichgewichtes wird der gaschromatographisch bestimmte Gesamtcylengehalt definiert als die Summe der D₄-, D₅-, D₆-Gehalte bezogen auf die Siloxanmatrix und festgestellt nach der Derivatisierung der α,ω-Diacetoxypolydimethylsiloxane bzw. der verzweigten Acetoxygruppen tragenden Siloxane zu den entsprechenden α,ω-Diisopropoxypolydimethylsiloxanen bzw. den verzweigten, Isopropoxygruppen tragenden Siloxanen herangezogen. Die Derivatisierung zu den α,ω-Diisopropoxypolydimethylsiloxanen bzw. den verzweigten, Isopropoxygruppen tragenden Siloxanen wird hierbei bewusst gewählt, um eine unter den Bedingungen der gaschromatographischen Analyse gegebenenfalls erfolgende, thermisch induzierte Rückspaltungsreaktion der α,ω-Diacetoxypolydimethylsiloxane bzw. der verzweigten, Acetoxygruppen tragenden Siloxane zu verhindern (zur Rückspaltungsreaktion siehe u.a. J. Pola et al., Collect. Czech. Chem. Commun. 1974, 39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)).

### Beispiel 1 (erfindungsgemäß)

In einem 500-ml-Vierhalsrundkolben mit KPG-Rührer, Innenthermometer und aufgesetztem Rückflusskühler werden 35,8 g Methyltriethoxysilan (0,263 mol) zusammen mit 166,3 g Dekamethylcyclopentasiloxan (D₅) (0,448 mol) unter Rühren bei 23°C vorgelegt und mit 0,51 g Trifluormethansulfonsäure (0,25 m-% bezogen auf den Ansatz) versetzt und für 4 Stunden bei 60°C äquilibriert.

Anschließend werden 55,0 g Essigsäureanhydrid und 3,9 g Essigsäure innerhalb von 5 Minuten hinzugefügt, wobei der Reaktionsansatz eine bräunliche Färbung annimmt. Während der Zugabe ist ein Temperaturanstieg der Reaktionsmischung auf 100°C zu beobachten.

Der Rückflusskühler wird dann durch eine Destillationsbrücke ausgetauscht.

Mit weiterem Aufheizen auf 150°C geht im Temperaturbereich zwischen 105°C und 120°C ein Destillat über, dessen zu 45,3 g (41,3 g theoretische Menge) bestimmt wurde. Die Analytik des Destillats (¹H-NMR und pH-Wertmessung mit Universalindikatorpapier) weist aus, dass es aus Ethylacetat und etwas mitgerissener Essigsäure besteht.

Danach lässt man noch den Reaktionsansatz für 6 Stunden bei 150°C reagieren, und lässt den Reaktionsansatz auf 23°C abkühlen.

Erhalten wird ein bräunlich, klares trifluormethansulfonsaures, verzweigtes, terminale Acetoxyfunktionen tragendes Siloxan, dessen Zielstruktur durch die begleitende ²⁹Si-NMR-Spektroskopie belegt wird. Gleichfalls sichert die ²⁹Si-NMR-Spektroskopie ab, dass im Rahmen der Messgenauigkeit keinerlei Anteile von SiOH/ SiOR-Gruppen zugegen sind.

### Überführung des verzweigten Acetoxysiloxans in das entsprechende verzweigte Isopropoxysiloxan zur analytischen Charakterisierung

Unmittelbar nach der Synthese werden 100,0 g dieses trifluormethansulfonsauren, äquilibrierten verzweigten Acetoxysiloxans in einem 250-ml-Vierhalsrundkolben ausgerüstet mit mit KPG-Rührer, Innenthermometer und aufgesetztem Rückflusskühler zusammen mit 23,2 g eines über Molekularsieb getrockneten Isopropanols unter Rühren bei 22°C vermischt. Die Reaktionsmischung wird dann durch Einleiten gasförmigen Ammoniaks (NH₃) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt.

Isoliert wird eine farblos, klare Flüssigkeit deren begleitendes ²⁹Si-NMR-Spektrum die quantitative Umwandlung des verzweigten Acetoxysiloxans in ein verzweigtes Isopropoxysiloxan belegt.

Ein Aliquot dieses verzweigten Isopropoxysiloxans wird entnommen und gaschromatographisch analysiert. Das Gaschromatogramm weist folgende Gehalte (Angaben in Massenprozent) auf:

| D₄ | D₅ | D₆ | Summe (D₄ - D₆) | Isopropanolgehalt | Ethylacetatgehalt |
|---|---|---|---|---|---|
| 1,94 % | 1,09 % | 0,32 % | 3,35 % | 12,50 % | 2,51 % |

Unter Berücksichtigung des Isopropanolüberschusses und des Ethylacetatgehalts sind hierbei die Gehalte an Siloxancyclen (D₄, D₅ und D₆) allein bezogen auf den Siloxananteil berechnet.

### Beispiel 2 (erfindungsgemäß)

In einem 500-ml-Vierhalsrundkolben mit KPG-Rührer, Innenthermometer und aufgesetzter Destillationsbrücke mit Destillatvorlage werden 35,8 g Methyltriethoxysilan (0,263 mol) zusammen mit 166,3 g Dekamethylcyclopentasiloxan (D₅) (0,448 mol) zusammen mit 55,0 g Essigsäureanhydrid und 3,9 g Essigsäure unter Rühren bei 23°C vorgelegt und mit 0,51 g Trifluormethansulfonsäure (0,25 m-% bezogen auf den Ansatz) versetzt. Die Temperatur der Reaktionsmischung steigt auf 50°C.

Innerhalb von 30 Minuten wird die Reaktionsmischung auf 150°C erhitzt. Im Temperaturbereich zwischen 105°C und 120°C werden 49,8 g Destillat abgenommen (41,3 g theoretische Menge). Die Analytik des Destillats (¹H-NMR und pH-Wertmessung mit Universalindikatorpapier) weist aus, dass es aus Ethylacetat und etwas mitgerissener Essigsäure besteht.

Danach lässt man noch den Reaktionsansatz für 6 Stunden bei 150°C reagieren, und lässt den Reaktionsansatz auf 23°C abkühlen.

Erhalten wird ein braunes, klares trifluormethansulfonsaures, verzweigtes, terminale Acetoxyfunktionen tragendes Siloxan, dessen Zielstruktur durch die begleitende ²⁹Si-NMR-Spektroskopie belegt wird. Gleichfalls sichert die ²⁹Si-NMR-Spektroskopie ab, dass im Rahmen der Messgenauigkeit keinerlei Anteile von SiOH/ SiOR-Gruppen zugegen sind.

### Überführung des verzweigten Acetoxysiloxans in das entsprechende verzweigte Isopropoxysiloxan zur analytischen Charakterisierung

Unmittelbar nach der Synthese werden 100,0 g dieses trifluormethansulfonsauren, äquilibrierten verzweigten Acetoxysiloxans in einem 250-ml-Vierhalsrundkolben ausgerüstet mit KPG-Rührer, Innenthermometer und aufgesetztem Rückflusskühler zusammen mit 23,2 g eines über Molekularsieb getrockneten Isopropanols unter Rühren bei 22°C vermischt. Die Reaktionsmischung wird dann durch Einleiten gasförmigen Ammoniaks (NH₃) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt.

Isoliert wird eine farblos, klare Flüssigkeit deren begleitendes ²⁹Si-NMR-Spektrum die quantitative Umwandlung des verzweigten Acetoxysiloxans in ein verzweigtes Isopropoxysiloxan belegt.

Ein Aliquot dieses verzweigten Isopropoxysiloxans wird entnommen und gaschromatographisch analysiert. Das Gaschromatogramm weist folgende Gehalte (Angaben in Massenprozent) auf:

| D₄ | D₅ | D₆ | Summe (D₄ - D₆) | Isopropanolgehalt | Ethylacetatgehalt |
|---|---|---|---|---|---|
| 1,84 % | 1,02 % | 0,28 % | 3,14 % | 10,11 % | 2,10 % |

Unter Berücksichtigung des Isopropanolüberschusses und des Ethylacetatgehalts sind hierbei die Gehalte an Siloxancyclen (D₄, D₅ und D₆) allein bezogen auf den Siloxananteil berechnet.

### Beispiel 3 (erfindungsgemäß)

In einem 500-ml-Vierhalsrundkolben mit KPG-Rührer, Innenthermometer und aufgesetztem Rückflusskühler werden 35,8 g Methyltriethoxysilan (0,263 mol) zusammen mit 166,3 g Dekamethylcyclopentasiloxan (D₅) (0,448 mol) unter Rühren bei 23°C vorgelegt und mit 0,51 g Trifluormethansulfonsäure (0,25 m-% bezogen auf den Ansatz) versetzt und für 4 Stunden bei 60°C äquilibriert.

Anschließend werden 6,8 g Essigsäure hinzugefügt und man rührt weitere 30 Minuten bei 60°C. 55,0 g Essigsäureanhydrid werden innerhalb von 5 Minuten hinzugegeben. Während der Zugabe ist ein Temperaturanstieg auf 100°C zu beobachten und die Reaktionsmischung bleibt nahezu farblos.

Der Rückflusskühler wird dann durch eine Destillationsbrücke ausgetauscht.

Mit weiterem Aufheizen auf 150°C geht im Temperaturbereich zwischen 105°C und 120°C ein Destillat über, dessen zu 50,1 g (41,3 g theoretische Menge) bestimmt wurde. Die Analytik des Destillats (¹H-NMR und pH-Wertmessung mit Universalindikatorpapier) weist aus, dass es aus Ethylacetat und mitgerissener Essigsäure besteht.

Danach lässt man noch den Reaktionsansatz für 6 Stunden bei 150°C reagieren, und lässt den Reaktionsansatz auf 23°C abkühlen.

Erhalten wird ein nahezu farbloses, klares trifluormethansulfonsaures, verzweigtes, terminale Acetoxyfunktionen tragendes Siloxan, dessen Zielstruktur durch die begleitende ²⁹Si-NMR-Spektroskopie belegt wird. Gleichfalls sichert die ²⁹Si-NMR-Spektroskopie ab, dass im Rahmen der Messgenauigkeit keinerlei Anteile von SiOH/ SiOR-Gruppen zugegen sind.

### Überführung des verzweigten Acetoxysiloxans in das entsprechende verzweigte Isopropoxysiloxan zur analytischen Charakterisierung

Unmittelbar nach der Synthese werden 100,0 g dieses trifluormethansulfonsauren, äquilibrierten verzweigten Acetoxysiloxans in einem 250-ml-Vierhalsrundkolben ausgerüstet mit KPG-Rührer, Innenthermometer und aufgesetztem Rückflusskühler zusammen mit 23,2 g eines über Molekularsieb getrockneten Isopropanols unter Rühren bei 22°C vermischt. Die Reaktionsmischung wird dann durch Einleiten gasförmigen Ammoniaks (NH₃) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt.

Isoliert wird eine farblos, klare Flüssigkeit deren begleitendes 29Si-NMR-Spektrum die quantitative Umwandlung des verzweigten Acetoxysiloxans in ein verzweigtes Isopropoxysiloxan belegt.

Ein Aliquot dieses verzweigten Isopropoxysiloxans wird entnommen und gaschromatographisch analysiert. Das Gaschromatogramm weist folgende Gehalte (Angaben in Massenprozent) auf:

| D₄ | D₅ | D₆ | Summe (D₄ - D₆) | Isopropanolgehalt | Ethylacetatgehalt |
|---|---|---|---|---|---|
| 1,88 % | 1,04 % | 0,30 % | 3,22 % | 11,50% | 2,30 % |

Unter Berücksichtigung des Isopropanolüberschusses und des Ethylacetatgehalts sind hierbei die Gehalte an Siloxancyclen (D₄, D₅ und D₆) allein bezogen auf den Siloxananteil berechnet.

## Patentansprüche

1. Reaktionssystem zur Herstellung Acetoxyfunktionen tragender Siloxane, umfassend
a) Alkoxygruppen tragende Silane und/oder Siloxane und/oder
b) Acetoxygruppen tragende Silane und/oder Siloxane, und/oder
c) Hydroxygruppen tragende Silane und/oder Siloxane,
d) gegebenenfalls einfache Siloxanzyklen, die nur aus D-Einheiten aufgebaut sind, und/ oder zyklisch-verzweigte Siloxane vom DT-Typ,
e) ein Reaktionsmedium, umfassend Essigsäureanhydrid, Perfluoralkansulfonsäure sowie vorzugsweise Essigsäure.

2. Reaktionssystem gemäß Anspruch 1 zur Herstellung verzweigter terminale Acetoxyfunktionen tragender Siloxane, **dadurch gekennzeichnet, dass** ein Alkoxygruppen tragendes, mindestens eine T- und/ oder Q-Gruppe enthaltendes Silan und/oder Siloxan und/oder ein Acetoxygruppen tragendes, mindestens eine T- und/ oder Q-Gruppe enthaltendes Silan/Siloxan,
und/oder, DT-Zyklen eingesetzt werden.

3. Reaktionssystem gemäß Anspruch 1 oder 2, **dadurch gekennzeichnet, dass** keine Hydroxygruppen tragenden Silane und/oder Siloxane eingesetzt werden.

4. Reaktionssystem gemäß einem der Ansprüche 1 bis 3, **dadurch gekennzeichnet, dass** Alkoxysilane eingesetzt werden, vorzugsweise Dimethyldialkoxysilane, Methyltrialkoxysilane und/oder ortho-Alkylkieselsäureester Si(OR)₄, mit R = Alkylrest, verzweigter Alkylrest oder Cycloalkylrest, mit 1 bis 10 Kohlenstoffatomen, vorzugsweise mit 1 bis 4, besonders bevorzugt R = Ethyl-.

5. Reaktionssystem gemäß einem der Ansprüche 1 bis 4, **dadurch gekennzeichnet, dass** lineare und/oder verzweigte Alkoxysiloxane eingesetzt werden, vorzugsweise solche der Formel: 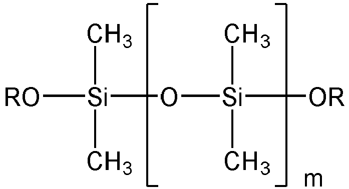
mit m = 1 bis 300, vorzugsweise 12 bis 150, besonders bevorzugt m = 20 bis 80,
oder
CH₃SiDₐD_{b}D_{c}(OR)₃
oder
SiDₐD_{b}D_{c}D_{d}(OR)₄
mit a,b,c und d jeweils unabhängig voneinander 1 bis 100, vorzugsweise 2 bis 50, besonders bevorzugt 10 bis 30 und
R = Alkylrest, verzweigter Alkylrest, Cycloalkylrest mit 1 bis 10 Kohlenstoffatomen, vorzugsweise mit 1 bis 4, besonders bevorzugt R = Ethyl-.

6. Reaktionssystem gemäß Anspruch 5, wobei die eingesetzten Alkoxysiloxane aus saurer Äquilibrierung von Dimethyldialkoxysilanen oder Methyltrialkoxysilanen mit einfachen Siloxanzyklen, umfassend D₄ und/oder D₅, resultieren.

7. Reaktionssystem gemäß einem der Ansprüche 1 bis 6, **dadurch gekennzeichnet, dass** einfache Siloxanzyklen eingesetzt werden, umfassend D₃ (Hexamethylcyclotrisiloxan), D₄ (Octamethylcyclotetrasiloxan), D₅ (Dekamethylcyclopentasiloxan) und/oder D₅ (Dodekamethylcyclohexasiloxan), wobei D₄ und/oder D₅ besonders bevorzugt sind, und D₅ am meisten bevorzugt ist.

8. Reaktionssystem gemäß einem der Ansprüche 1 bis 7, **dadurch gekennzeichnet, dass** hydroxyfunktionelle Silane und/ oder hydroxyfunktionelle Siloxane eingesetzt werden, vorzugsweise Dimethylsilanol (CH₃)Si(OH)₂, Methylsilanol (CH₃Si(OH)₃) und/oder ortho-Kieselsäure Si(OH)₄ und/ oder als hydroxyfunktionelle Siloxane vorzugsweise α,ω-Polydimethylsiloxandiole der folgenden Formel: 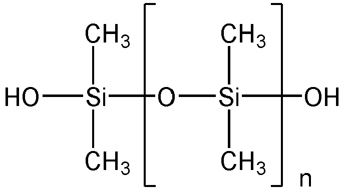
mit n = 1 bis 300, vorzugsweise n = 12 bis 150, besonders bevorzugt n = 20 bis 80
eingesetzt werden.

9. Reaktionssystem gemäß einem der Ansprüche 1 bis 8, **dadurch gekennzeichnet, dass**
zyklisch-verzweigte Siloxane vom DT-Typ eingesetzt werden, vorzugsweise
a) Mischungen zyklischer-verzweigter Siloxane vom DΓΓ-Typ, die ausschließlich aus D- und T-Einheiten aufweisenden Siloxanen bestehen und deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, ≤ 2 Molprozent, bevorzugt kleiner 1 Molprozent ist, und die bevorzugt zumindest 5 Gewichtsprozent Siloxancyclen, wie vorzugsweise Oktamethylcyclotetrasiloxan (D₄), Dekamethylcyclopentasiloxan (D₅) und/oder deren Mischungen enthalten oder aber
ii) Mischungen zyklischer-verzweigter, ausschließlich D- und T-Einheiten aufweisender Siloxane deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, größer 2 und kleiner 10 Molprozent sind.

10. Verfahren zur Herstellung linearer oder verzweigter Acetoxyfunktionen tragender Siloxane, **dadurch gekennzeichnet, dass**
a) Alkoxygruppen tragende Silane und/oder Siloxane, und/oder
b) Acetoxygruppen tragende Silane und/oder Siloxane, und/oder
c) Hydroxygruppen tragende Silane und/oder Siloxane,
d) gegebenenfalls einfache Siloxanzyklen, die nur aus D-Einheiten aufgebaut sind, und / oder zyklisch-verzweigte Siloxane vom DT-Typ,
mit Essigsäureanhydrid, Perfluoralkansulfonsäure sowie vorzugsweise Essigsäure umgesetzt werden.

11. Verfahren nach Anspruch 10 zur Herstellung verzweigter terminale Acetoxyfunktionen tragender Siloxane, **dadurch gekennzeichnet, dass** als Komponente a) ein terminale Alkoxygruppen tragendes, verzweigtes Silikonäquilibrat zum Einsatz kommt.

12. Verfahren nach Anspruch 10 oder 11 zur Herstellung verzweigter terminale Acetoxyfunktionen tragender Siloxane, **dadurch gekennzeichnet, dass** alle Komponenten a) und/oder b) sowie optional c) und gegebenenfalls d) zusammen mit Essigsäureanhydrid, Perfluoralkansulfonsäure sowie vorzugsweise Essigsäure vorgelegt und umgesetzt werden.

13. Verfahren nach Anspruch 10 zur Herstellung von α,ω-Diacetoxypolydimethylsiloxanen, **dadurch gekennzeichnet, dass** Komponente c) alleine und/ oder gegebenenfalls zusammen mit einfachen Siloxanzyklen mit Essigsäureanhydrid, Perfluoralkansulfonsäure sowie vorzugsweise Essigsäure umgesetzt wird.

14. Verfahren nach einem der Ansprüche 10 bis 13, **dadurch gekennzeichnet, dass** es unter Einsatz eines Reaktionssystems, wie in einem der Ansprüche 1 bis 9 definiert, durchgeführt wird.

15. Trifluormethansulfonsaure, endäquilibrierte lineare α,ω-Acetoxygruppen-tragende Siloxane, welche Gesamtcyclengehalte, definiert als Summe der Gehaltsanteile der zyklischen Siloxane umfassend D₄, D₅ und D₆ bezogen auf die Siloxanmatrix und gaschromatographisch ermittelt nach deren Derivatisierung zu den entsprechenden linearen α,ω-Isopropoxysiloxanen von kleiner 13, vorzugsweise kleiner 12 Gewichtsprozent aufweisen, vorzugsweise hergestellt nach einem Verfahren gemäß Anspruch 10 und 14.

16. Trifluormethansulfonsaure, endäquilibrierte verzweigte Acetoxygruppen-tragende Siloxane, vorzugsweise hergestellt nach einem Verfahren nach Anspruch 10 bis 12, **dadurch gekennzeichnet, dass** sie Gesamtcyclengehalte, definiert als Summe der Gehaltsanteile der zyklischen Siloxane umfassend D₄, D₅ und D₆ bezogen auf die Siloxanmatrix und gaschromatographisch ermittelt nach deren Derivatisierung zu den entsprechenden verzweigten Isopropoxysiloxanen von kleiner 8, vorzugsweise kleiner 7 Gewichtsprozent aufweisen, vorzugsweise hergestellt nach einem Verfahren nach Anspruch 10 bis 13.

17. Verwendung von Acetoxygruppen tragenden Siloxanen, hergestellt unter Einsatz eines Reaktionssystems, wie in einem der Ansprüche 1 bis 9 definiert, insbesondere nach Maßgabe von zumindest einem der Ansprüche 10 bis 16, zur Herstellung von Polyethersiloxanen, insbesondere für die Herstellung von Polyurethanschaumstabilisatoren, Entschäumern, Lack- und Dispergieradditiven und/oder Dismulgatoren.

## Claims

1. Reaction system for the production of siloxanes bearing acetoxy functions, comprising
a) silanes and/or siloxanes bearing alkoxy groups and/or
b) silanes and/or siloxanes bearing acetoxy groups, and/or
c) silanes and/or siloxanes bearing hydroxy groups,
d) optionally simple siloxane cycles formed only from D units and/or cyclic branched siloxanes of the DT type,
e) a reaction medium, comprising acetic anhydride, perfluoroalkanesulfonic acid and preferably acetic acid.

2. Reaction system according to Claim 1 for the production of branched siloxanes bearing terminal acetoxy functions, **characterized in that** a silane and/or siloxane bearing alkoxy groups and containing at least one T and/or Q group, and/or a silane/siloxane bearing acetoxy groups and containing at least one T and/or Q group, and/or DT cycles are used.

3. Reaction system according to Claim 1 or 2, **characterized in that** no silanes and/or siloxanes bearing hydroxy groups are used.

4. Reaction system according to any of Claims 1 to 3, **characterized in that** alkoxysilanes are used, preferably dimethyldialkoxysilanes, methyltrialkoxysilanes and/or alkyl orthosilicates Si(OR)₄, where R = alkyl radical, branched alkyl radical or cycloalkyl radical, having 1 to 10, preferably having 1 to 4, carbon atoms, particularly preferably R = ethyl-.

5. Reaction system according to any of Claims 1 to 4, **characterized in that** linear and/or branched alkoxysiloxanes are used, preferably those of the formula: 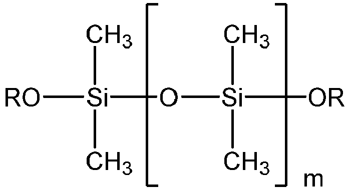
where m = 1 to 300, preferably 12 to 150, particularly preferably m = 20 to 80,
or
CH₃SiDₐD_{b}D_{c}(OR) ₃
or
SiDₐD_{b}D_{c}D_{d} (OR) ₄
where a, b, c and d are each independently 1 to 100, preferably 2 to 50, particularly preferably 10 to 30 and
R = alkyl radical, branched alkyl radical, cycloalkyl radical having 1 to 10, preferably having 1 to 4, carbon atoms, particularly preferably R = ethyl-.

6. Reaction system according to Claim 5, wherein the alkoxysiloxanes used result from acidic equilibration of dimethyldialkoxysilanes or methyltrialkoxysilanes with simple siloxane cycles, comprising D₄ and/or D₅.

7. Reaction system according to any of Claims 1 to 6, **characterized in that** simple siloxane cycles are used, comprising D₃ (hexamethylcyclotrisiloxane), D₄ (octamethylcyclotetrasiloxane), D₅ (decamethylcyclopentasiloxane) and/or D₆ (dodecamethylcyclohexasiloxane), where D₄ and/or D₅ are particularly preferred, and D₅ is most preferred.

8. Reaction system according to any of Claims 1 to 7, **characterized in that** hydroxy-functional silanes and/or hydroxy-functional siloxanes are used, preferably dimethylsilanol (CH₃) Si (OH)₂, methylsilanol (CH₃Si (OH) ₃) and/or orthosilicic acid Si(OH)₄, and/or as hydroxy-functional siloxanes preferably α,ω-polydimethylsiloxanediols of the following formula: 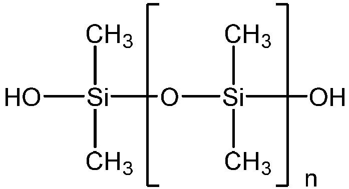
where n = 1 to 300, preferably n = 12 to 150, particularly preferably n = 20 to 80
are used.

9. Reaction system according to any of Claims 1 to 8, **characterized in that**
cyclic branched siloxanes of the DT type are used, preferably
a) mixtures of cyclic branched siloxanes of the D/T type which consist exclusively of siloxanes having D and T units and whose cumulative proportion of D and T units present in the siloxane matrix and having Si-alkoxy and/or SiOH groups, determinable by ²⁹Si NMR spectroscopy, is ≤ 2 mole per cent, preferably less than 1 mole per cent, and which preferably contain at least 5 per cent by weight of siloxane cycles, such as preferably octamethylcyclotetrasiloxane (D₄), decamethylcyclopentasiloxane (D₅) and/or mixtures of these or else
ii) mixtures of cyclic branched siloxanes having exclusively D and T units whose cumulative proportion of D and T units present in the siloxane matrix and having Si-alkoxy and/or SiOH groups, determinable by ²⁹Si NMR spectroscopy, is greater than 2 and less than 10 mole per cent.

10. Process for producing linear or branched siloxanes bearing acetoxy functions, **characterized in that**
a) silanes and/or siloxanes bearing alkoxy groups, and/or
b) silanes and/or siloxanes bearing acetoxy groups, and/or
c) silanes and/or siloxanes bearing hydroxy groups,
d) optionally simple siloxane cycles formed only from D units and/or cyclic branched siloxanes of the DT type,
are reacted with acetic anhydride, perfluoroalkanesulfonic acid and preferably acetic acid.

11. Process according to Claim 10 for producing branched siloxanes bearing terminal acetoxy functions, **characterized in that** the component a) used is a branched silicone equilibrate bearing terminal alkoxy groups.

12. Process according to Claim 10 or 11 for producing branched siloxanes bearing terminal acetoxy functions, **characterized in that** all components a) and/or b) and also optionally c) and possibly d) are initially charged and reacted together with acetic anhydride, perfluoroalkanesulfonic acid and preferably acetic acid.

13. Process according to Claim 10 for producing α,ω-diacetoxypolydimethylsiloxanes, **characterized in that** component c) is reacted, alone and/or optionally together with simple siloxane cycles, with acetic anhydride, perfluoroalkanesulfonic acid and preferably acetic acid.

14. Process according to any of Claims 10 to 13, **characterized in that** it is conducted using a reaction system as defined in any of Claims 1 to 9.

15. Trifluoromethanesulfonic acid-acidified, endequilibrated linear siloxanes bearing α,ω-acetoxy groups and having total cycles contents, defined as the sum total of the content fractions of the cyclic siloxanes comprising D₄, D₅ and D₆, based on the siloxane matrix and determined by gas chromatography after their derivatization to give the corresponding linear α,ω-isopropoxysiloxanes, of less than 13, preferably less than 12 per cent by weight, preferably produced by a process according to Claims 10 and 14.

16. Trifluoromethanesulfonic acid-acidified, endequilibrated branched siloxanes bearing acetoxy groups, preferably produced by a process according to Claims 10 to 12, **characterized in that** they have total cycles contents, defined as the sum total of the content fractions of the cyclic siloxanes comprising D₄, D₅ and D₆, based on the siloxane matrix and determined by gas chromatography after their derivatization to give the corresponding branched isopropoxysiloxanes, of less than 8, preferably less than 7 per cent by weight, preferably produced by a process according to Claims 10 to 13.

17. Use of siloxanes bearing acetoxy groups, produced using a reaction system as defined in any of Claims 1 to 9 and in particular according to at least one of Claims 10 to 16, for producing polyethersiloxanes, especially for producing polyurethane foam stabilizers, defoamers, paint and dispersing additives and/or demulsifiers.

## Revendications

1. Système réactionnel destiné à la préparation de siloxanes portant des fonctions acétoxy, comprenant
a) des silanes et/ou siloxanes portant des groupes alcoxy et/ou
b) des silanes et/ou siloxanes portant des groupes acétoxy, et/ou
c) des silanes et/ou siloxanes portant des groupes hydroxy,
d) éventuellement des cycles siloxane simples qui ne sont constitués que d'unités D, et/ou des siloxanes ramifiés-cycliques du type DT,
e) un milieu de réaction, comprenant de l'anhydride acétique, un acide perfluoroalcanesulfonique ainsi que de préférence de l'acide acétique.

2. Système réactionnel selon la revendication 1, destiné à la préparation de siloxanes ramifiés portant des fonctions acétoxy terminales, **caractérisé en ce que** sont utilisés un silane et/ou un siloxane contenant au moins un groupe T et/ou un groupe Q, portant des groupes alcoxy, et/ou un silane/siloxane contenant au moins un groupe T et/ou un groupe Q, portant des groupes acétoxy,
et/ou des cycles DT.

3. Système réactionnel selon la revendication 1 ou 2, **caractérisé en ce que** ne sont pas utilisés de silanes et/ou siloxanes portant des groupes hydroxy.

4. Système réactionnel selon l'une des revendications 1 à 3, **caractérisé en ce que** sont utilisés des alcoxysilanes, de préférence des diméthyldialcoxysilanes, des méthyltrialcoxysilanes et/ou des esters d'acides ortho-alkylsiliciques Si(OR)₄, où R = radical alkyle, radical alkyle ramifié ou radical cycloalkyle, ayant de 1 à 10, de préférence ayant de 1 à 4 atomes de carbone, de façon particulièrement préférée R = éthyle-.

5. Système réactionnel selon l'une des revendications 1 à 4, **caractérisé en ce que** sont utilisés des alcoxysilanes linéaires et/ou des alcoxysilanes ramifiés, de préférence ceux de formule : 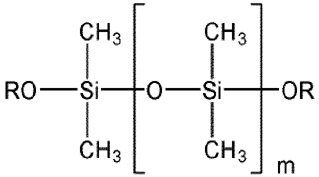
où m = 1 à 300, de préférence 12 à 150, de façon particulièrement préférée m = 20 à 80,
ou
CH₃SiDₐD_{b}D_{c}(OR) ₃
ou
SiDₐD_{b}D_{c}D_{d}(OR)₄
où a, b, c et d valent chacun, indépendamment les uns des autres, 1 à 100, de préférence 2 à 50, de façon particulièrement préférée 10 à 30 et
R = radical alkyle, radical alkyle ramifié, radical cycloalkyle ayant de 1 à 10, de préférence ayant de 1 à 4 atomes de carbone, de façon particulièrement préférée R = éthyle-.

6. Système réactionnel selon la revendication 5, dans lequel les alcoxysilanes utilisés résultent d'équilibrage acide de diméthyldialcoxysilanes ou méthyltrialcoxysilanes avec des cycles siloxanes simples, comprenant D₄ et/ou D₅.

7. Système réactionnel selon l'une des revendications 1 à 6, **caractérisé en ce que** sont utilisés des cycles siloxanes simples, comprenant D₃ (hexaméthylcyclotrisiloxane), D₄ (octaméthylcyclotétrasiloxane), D₅ (décaméthylcyclopentasiloxane et/ou D₆ (dodécaméthylcyclohexasiloxane), D₄ et/ou D₅ étant particulièrement préférés, et D₅ étant le plus souvent préféré.

8. Système réactionnel selon l'une des revendications 1 à 7, **caractérisé en ce que** sont utilisés des silanes à fonction hydroxy et/ou des siloxanes à fonction hydroxy, de préférence le diméthylsilanol (CH₃)Si(OH)₂, le méthylsilanol (CH₃Si(OH)₃) et/ou l'acide orthosilicique Si(OH)₄ et/ou en tant que siloxanes à fonction hydroxy de préférence des α,ω-polydiméthylsiloxanediols de formule suivante : 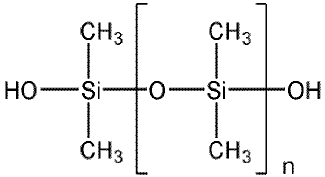 où n = 1 à 300, de préférence n = 12 à 150, de façon particulièrement préférée n = 20 à 80.

9. Système réactionnel selon l'une des revendications 1 à 8, **caractérisé en ce que** sont utilisés des siloxanes ramifiés-cycliques du type DT, de préférence
a) des mélanges de siloxanes ramifiés-cycliques du type D/T, qui sont exclusivement constitués de siloxanes comportant des unités D et T et dont la fraction brute déterminable par spectroscopie de RMN-²⁹Si des unités D et T présentes dans la matrice siloxane, qui comportent des groupes Sialcoxy et/ou SiOH, est ≤ 2 pour cent en moles, de préférence inférieure à 1 pour cent en moles, et qui contiennent de préférence au moins 5 pour cent en poids de cycles siloxane, tels que de préférence l'octaméthylcyclotétrasiloxane (D₄), le décaméthylcyclopentasiloxane (D₅) et/ou des mélanges de ceux-ci ou bien
ii) des mélanges de siloxanes ramifiés-cycliques comportant exclusivement des unités D et T, dont la fraction brute déterminable par spectroscopie de RMN-²⁹Si des unités D et T présentes dans la matrice siloxane, qui comportent des groupes Sialcoxy et/ou SiOH, est supérieure à 2 et inférieure à 10 pour cent en moles.

10. Procédé pour la préparation de siloxanes linéaires ou ramifiés, portant des fonctions acétoxy, **caractérisé en ce que** sont mis en réaction
a) des silanes et/ou siloxanes portant des groupes alcoxy et/ou
b) des silanes et/ou siloxanes portant des groupes acétoxy, et/ou
c) des silanes et/ou siloxanes portant des groupes hydroxy,
d) éventuellement des cycles siloxane simples qui ne sont constitués que d'unités D, et/ou des siloxanes ramifiés-cycliques du type DT,
avec de l'anhydride acétique, un acide perfluoroalcanesulfonique ainsi que de préférence de l'acide acétique.

11. Procédé selon la revendication 10 pour la préparation de siloxanes ramifiés portant des fonctions acétoxy terminales, **caractérisé en ce qu'**est utilisé en tant que composant a) un produit d'équilibrage silicié ramifié, portant des groupes alcoxy terminaux.

12. Procédé selon la revendication 10 ou 11 pour la préparation de siloxanes ramifiés portant des fonctions acétoxy terminales, **caractérisé en ce que** tous les composants a) et/ou b) ainsi qu'en option c) et éventuellement d) sont disposés au préalable et mis en réaction conjointement avec de l'anhydride acétique, un acide perfluoroalcanesulfonique ainsi que de préférence de l'acide acétique.

13. Procédé selon la revendication 10 pour la préparation d'α,ω-diacétoxypolydiméthylsiloxanes, **caractérisé en ce que** le composant c) seul et/ou éventuellement conjointement avec des cycles siloxane simples est mis en réaction avec de l'anhydride acétique, un acide perfluoroalcanesulfonique ainsi que de préférence de l'acide acétique.

14. Procédé selon l'une des revendications 10 à 13, **caractérisé en ce qu'**il est effectué avec utilisation d'un système réactionnel tel que défini dans l'une des revendications 1 à 9.

15. Siloxanes linéaires portant des groupes α,ω-acétoxy, à équilibrage complet avec de l'acide trifluorométhanesulfonique, qui présentent des teneurs en cycles totaux, définies comme la somme des fractions de teneurs en siloxanes cycliques comprenant D₄, D₅ et D₆ par rapport à la matrice siloxane et déterminées par chromatographie en phase gazeuse après leur transformation en dérivés consistant en les α,ω-isopropoxysiloxanes linéaires correspondants, de moins de 13, de préférence moins de 12 pour cent en poids, préparés de préférence conformément à un procédé selon la revendication 10 et la revendication 14.

16. Siloxanes ramifiés portant des groupes acétoxy, à équilibrage complet avec de l'acide trifluorométhanesulfonique, préparés de préférence conformément à un procédé selon la revendication 10 à la revendication 12, **caractérisés en ce qu'**ils présentent des teneurs en cycles totaux, définies comme la somme des fractions de teneurs en siloxanes cycliques comprenant D₄, D₅ et D₆ par rapport à la matrice siloxane et déterminées par chromatographie en phase gazeuse après leur transformation en dérivés consistant en les isopropoxysiloxanes ramifiés correspondants, de moins de 8, de préférence moins de 7 pour cent en poids, préparés de préférence conformément à un procédé selon la revendication 10 à la revendication 13.

17. Utilisation de siloxanes portant des groupes acétoxy, préparés avec utilisation d'un système réactionnel tel que défini dans les revendications 1 à 9, en particulier conformément à au moins l'une des revendications 10 à 16, pour la préparation de polyéthersiloxanes, en particulier pour la production de stabilisants de mousses de polyuréthane, d'antimousses, d'additifs pour dispersants et peintures et/ou de désémulsifiants.
